# EUROPÄISCHE PATENTSCHRIFT

(11) **EP 1 389 561 B1**
(45) Veröffentlichungstag und Bekanntmachung des Hinweises auf die Patenterteilung: **14.01.2009**
(21) Anmeldenummer: 03018304.0
(22) Anmeldetag: 12.08.2003
(51) Int. Cl.: B60P 1/64, B60P 7/13

(54) **Verschiebe- und Sperrvorrichtung für zwei Baueinheiten und Transportfahrzeug mit einer solchen Vorrichtung**
Displacement and locking device for two assemblies and transport vehicle with such a device
Dispositif de déplacement et de blocage pour deux ensembles et véhicule de transport comportant un tel dispostitif

(30) Priorität: 14.08.2002 DE 20212512 U
(43) Veröffentlichungstag der Anmeldung: 18.02.2004
(73) Patentinhaber: DAUTEL GMBH, D-74211 Leingarten (DE)
(72) Erfinder: Neffle, Peter, 74366 Kirchheim (DE)
(74) Vertreter: Clemens, Gerhard

(56) Entgegenhaltungen:
- EP-A- 0 490 366
- DE-A1- 2 137 729
- DE-A1- 3 049 507
- DE-A1- 19 813 433

## Beschreibung

### TECHNISCHES GEBIET

Vorliegende Erfindung betrifft eine Verschiebe- und Sperrvorrichtung zum lösbaren Verriegeln einer ersten Baueinheit mit einer zweiten Baueinheit, wobei zum Sperren die Baueinheiten aufeinander absetzbar sind und dann eine Relativverschiebung beider Baueinheiten erfolgt, insbesondere für einen Lastkraftwagen, Anhänger, Sattelauflieger oder dergleichen jeweils mit Wechselaufbau mit einem ersten Widerlagerelement und einem zweiten Widerlagerelement, die beabstandet an der ersten Baueinheit befestigbar sind, einer über eine Steuereinrichtung ansteuerbare Verschiebeeinrichtung, die an der zweiten Baueinheit befestigbar ist, wobei im aufgesetzten Zustand der Baueinheiten die Verschiebeeinrichtung zwischen beiden Widerlagerelementen angeordnet ist, derart, dass die Verschiebeeinrichtung Lineareinheit durch Längsverschiebung auf die Widerlagerelemente zum Bewirken einer Relativbewegung der beiden Baueinheiten einwirken kann.

Die vorliegende Erfindung betrifft weiterhin ein Transportfahrzeug, insbesondere Lastkraftwagen, Anhänger, Sattelauflieger oder dergleichen mit einem Fahrgestell mit Wechselaufbau.

Das Einsatzgebiet derartiger Fahrzeuge mit Wechselaufbau ist vielfältig. So werden derartige Fahrzeuge im Containerverkehr eingesetzt. Vielfach werden solche Fahrzeuge mit Wechselaufbau auch für den Fall verwendet, daß, abhängig vom jeweiligen momentanen Einsatzgebiet des Fahrzeugs, unterschiedliche Aufbauten erforderlich sind, beispielsweise eine LKW-Pritsche, einen Möbelkoffer, einen Kipper oder einen Transportbetonbehälter. Der Einsatz derartiger Wechselaufbauten ermöglicht es, das jeweilige Fahrzeug optimal auszunutzen und jeweils für den Benutzungsfall den gerade benötigten Wechselaufbau zur Verfügung zu haben. So ist beispielsweise in der Bauindustrie erwünscht, Transportfahrzeuge für unterschiedlichste Einsatzmöglichkeiten zur Verfügung zu haben. Um hohe Betonierkapazitäten abdecken zu können, die meist an bestimmten Terminen bei Fertigstellung von Bauabschnitten auftreten, wird die erforderliche Anzahl an im Fuhrpark vorhandenen Fahrzeugen mit einem Wechselaufbau mit einem Transportbetonbehälter ausgestattet. Ansonsten können dieselben Fahrzeuge in der übrigen Zeit als Fahrzeuge mit einem Pritsche- oder Kipperaufbau zum Transport von Schalmaterial, Bausteinen, Erdaushub oder ähnlichem Gut eingesetzt werden. Dadurch gestaltet sich der Einsatz derartiger Fahrzeuge wirtschaftlich, da nicht für jeden Einsatzzweck ein voll ausgerüstetes Fahrzeug angeschafft werden muß, sondern nur ein entsprechender Wechselaufbau.

Für das Aufsetzen bzw. Absetzen des Wechselaufbaus müssen geeignete Wechselsysteme vorhanden sein, die ein schnelles und sicheres Wechseln gestatten. Neben dem Wechseln des Aufbaus ist auch für eine sichere Verriegelung des auf dem Fahrzeug aufgesetzten Wechselaufbaus zu gewährleisten. Der eigentliche Wechselvorgang wird vielfach mit einem fahrzeugeigene Wechselsystem durchgeführt. Hierbei wird der Wechselaufbau vom Fahrzeug gelöst und angehoben, um auf dafür vorgesehene Stützvorrichtungen abgesetzt zu werden. Nach dem Absetzen des Wechselsaufbaus auf der Stützvorrichtung kann das Fahrzeug unter dem Wechselaufbau herausfahren und an anderer Stelle einen andersgearteten Wechselaufbau aufnehmen.

Bei derartigen Transportfahrzeugen werden zum Bewegen des Wechselaufbaus verschiedene Hubeinrichtungen, teils mechanischer, pneumatischer und hydraulischer Art verwendet. Bevorzugt wird hierbei ein Hydrauliksystem mit Hydraulikzylindern eingesetzt.

Die konstruktive Verwirklichung derartiger Wechselsysteme gestaltet sich recht aufwendig. Dies liegt zum einen daran, daß bei Lastkraftwagenchaasis, insbesondere für Wechselaufbauten verschiedener Ausgestaltung oft eine große Zahl von für das Fahrzeug notwendigen oder für die verschiedenen Ausgestaltungen erforderlichen Einrichtungen, wie beispielsweise Treibstofftanks, Batteriehalterungen, Luftkessel, Hydraulikpumpen, Steuerungen, Hydrauliktanks und dergleichen an bestimmten Stellen am Fahrzeug untergebracht werden müssen, so daß das für die Wechselaufbaukonstruktion zu Verfügung stehende Raumangebot relativ begrenzt ist. Hinzu kommt, daß eine Standardisierung nur schwer zu erreichen ist, da die Fahrzeugabmessungen und die Lage der zusätzlichen Einrichtungen und damit das Raumangebot für die Wechselaufbaukonstruktion von Fahrzeugtyp zu Fahrzeugtyp sehr schwankt, da die LKW-Hersteller bei der Konstruktion des Fahrgestells in diesem Bereich keine genormten Abmessungen oder Bauteilanordnungen verwenden müssen.

### STAND DER TECHNIK

Aus der DE 30 49 507 A1 ist ein Transportfahrzeug mit Wechselaufbau der eingangs genannten Art bekannt. Bei diesem bekannten Fahrzeug sind in einem Hebehydraulikkreislauf betriebene Hub-Senk-Zylinder-Kolben-Aggregate vorhanden, die den Wechselaufbau unter einem hydraulischen Aufsetzdruck absenken und heben. Hierzu sind auf beiden Seiten des Fahrzeugs in Fahrtrichtung gesehen jeweils im Bereich zwischen dem Führerhaus des Fahrzeugs und dem Wechselaufbau und im hinteren Bereich der Hinterachse des Fahrzeugs zwei Aggregate vorhanden, wobei die vorderen Aggregate oberhalb der Oberkante der Wechselvorrichtung und die hinteren beiden Aggregate unterhalb der Oberkante der Wechselvorrichtung angeordnet sind. Daneben ist mindestens ein in einem Schiebehydraulikkreislauf betriebenes Schiebe-Zylinder-Kolben-Aggregat vorhanden, das mit einem Schiebestangenkopf in eine Mitnahmevorrichtung eingreift und den Wechselaufbau relativ zur Wechselvorrichtung verschiebt. Die Schiebebewegung zum Verriegeln bzw. Entriegeln des Wechselaufbaus und die Hubbewegung zum Heben bzw. Absenken des Wechselaufbaus sind hierbei miteinander zwangsgekoppelt, indem nämlich der Schiebehydraulikkreislauf mit dem Hebehydraulikkreislauf direkt parallel geschaltet ist und zwar so, daß einerseits Zylinderräume für die Senk- und Verriegelungsbewegung und andererseits Zylinderräume für die Entriegelungs- und die Hebebewegung hydraulisch gekoppelt sind. Zur Sicherung des mit der Wechselvorrichtung verriegelten Wechselaufbaus sind Sicherungsmittel vorhanden, die den aufgesetzten und verriegelten Wechselaufbau gegen unbeabsichtigtes Verschieben sichern. Diese Sicherungsmaßnahme ist insbesondere deshalb erforderlich, um beispielsweise beim Anfahren die infolge der Massenträgheit des Aufbaus entstehenden entgegen der Fahrtrichtung wirkenden Kräfte aufnehmen zu können, was insbesondere bei einem auf einem Lastkraftwagen verriegelten Sattelauflieger erforderlich wird, da hier sehr große Kräfte auftreten.

Aus der EP 0 490 366 B1 ist ein Transportfahrzeug mit Wechselaufbau bekannt, bei dem durch die Hubbewegung einer Hubeinrichtung, die bevorzugt zumindest ein Kolben-Zylinder-Aggregat aufweist, die Senkbewegung und die Verriegelungsbewegung zum Aufsetzen des Wechselaufbaus und/oder die Entriegelungsbewegung und die Hebebewegung zum Absetzen des Wechselaufbaus ausgelöst und/oder durchgeführt wird. Somit ist an die Hubbewegung des angesetzten Kolben-Zylinder-Aggregats eine Folgebewegung gekoppelt, wodurch der Einsatz eines Kolben-Zylinder-Aggregats zum Aufbringen der Relativverschiebung entfallen kann.

In der DE 198 13 433 A ist eine Vorrichtung für Wechselaufbauten auf Lastfahrzeugen offenbart, bei der an einem Aufbaurahmen eine U-profilförmige nach unten offene Traverse vorhanden ist, in die von unten her ein längsverschiebliches Gehäuse einführbar ist. Innerhalb des Gehäuses ist ein am Fahrzeugrahmen fest angeschlossener Kern vorhanden. Auf beiden Seiten des Kerns befindet sich ein Luftkissen jeweils zwischen der Außenseite des Kerns und der Innenwandung des Gehäuses. Zum Verschieben des Aufbaurahmens relativ zum Fahrzeugrahmen wird eines der beiden Luftkissen mit Druckluft beaufschlagt und das andere Luftkissen drucklos geschaltet. Zum Verriegeln selbst wird an einer anderen Stelle des Fahrzeugrahmens ein Sperrriegel zwischen einem Anschlag und einer Halterung eingeführt. Dieser zusätzliche Sperrriegel ist erforderlich, da die Luftkissen selbst keine zuverlässige Verriegelung (entgegen Fahrtrichtung) während des Fahrbetriebs gewährleisten können.

### DARSTELLUNG DER ERFINDUNG

Der vorliegenden Erfindung liegt die Aufgabe beziehungsweise das technische Problem zugrunde, eine Verschiebe- und Sperrvorrichtung der eingangs genannten Art, insbesondere für Transportfahrzeuge mit Wechselaufbau, anzugeben, die einen kompakten Aufbau aufweist, wirtschaftlich hergestellt und montiert werden kann und eine dauerhaft zuverlässige Funktion gewährleistet.

Die erfindungsgemäße Verschiebe- und Sperrvorrichtung ist durch die Merkmale des unabhängigen Anspruchs 1 gegeben. Vorteilhafte Ausgestaltungen und Weiterbildungen sind Gegenstand der von Anspruch 1 direkt oder indirekt abhängigen Ansprüche.

Die erfindungegemäße Verschiebe- und Sperrvorrichtung zeichnet sich demgemäß dadurch aus, dass die Verschiebeeinrichtung eine in einer Lagereinheit längsverschieblich gelagerte profilstangenförmige Lineareinheit aufweist, die Lagereinheit der Verschiebeeinrichtung im verriegelten Zustand ein Gegenwiderlagerelement zum ersten beziehungsweise zweiten Widerlagerelement bildet und das erste Widerlagerelement eine erste Innenanschlagfläche und das zweite Widerlagerelement eine zweite Tnnenanschlagfläche aufweist, wobei jeweils die Endstirnflächen der Lineareinheit der Verschiebeeinrichtung zum Durchführen der Relativverschiebung auf die erste beziehungsweise zweite Innenanschlagfläche einwirkt.

Eine besonders kompakte Ausführungsvariante, zeichnet sich dadurch aus, dass eine Klappeinheit oder Schiebeeinheit vorhanden ist, die im verriegelten Zustand der aufeinander abgesetzten Baueinheiten zwischen das Gehäuse und das erste beziehungsweise zweite Widerlagerelement klappbar beziehungsweise schiebbar ist. Diese Klappeinheit oder Schiebeeinheit kann entweder manuell betätigbar oder über Aggregate ansteuerbar/betätigbar sein.

In einer besonders vorteilhaften Weiterbildung, die einerseits einen konstruktiv einfachen Aufbau gewährleistet und eine einfache Bedienung ermöglicht, zeichnet sich dadurch aus, dass die Klappeinheit als um eine Drehachse drehbar gelagerte Klappeinheit ausgebildet ist, die in Sicherungsposition die ausgefahrene Lineareinheit der Verschiebeeinrichtung bereichsweise insbesondere formschlüssig umgibt. Dadurch wird die Lineareinheit weitestgehend vor Verschmutzung geschützt.

Bevorzugt ist die Klappeinheit dabei so ausgebildet, dass ihre Eigengewichtsverteilung so angeordnet ist, dass ihre Gewichtskraft einem Öffnen aus der Sicherungsposition heraus entgegenwirkt. Zur Erhöhung der Sicherheit kann gemäß einer bevorzugten Ausgestaltung ein Sicherungsriegel vorhanden sein, der die Klappeinheit oder Schiebeeinheit in Sicherungsposition arretiert.

Hinsichtlich einer automatischen Betätigung der Klappeinheit oder Schiebeeinheit ist es vorteilhaft, in deren Nähe einen Positionsdetektor für ihre Position anzuordnen, der entsprechende Signale an eine Steuereinrichtung abgibt, welche Signale auch dazu benutzt werden können, optisch oder akkustisch anzuzeigen, ob sich die Klappeinheit oder Schiebeeinheit in Sicherungsposition befindet oder nicht.

Eine besonders bevorzugte Ausgestaltung zeichnet sich dadurch aus, dass die Klappeinheit oder Schiebeeinheit in Sicherungsposition zwischen dem ersten Widerlagerelement und dem Zylinder vorhanden ist und die im Verriegelungszustand auftretenden Beanspruchungen zwischen den beiden Baueinheiten von dem ersten Widerlagerelement über die Klappeinheit oder Schiebeeinheit auf die Lagereinheit übertragen wird. In dieser Ausführungsvariante überträgt die Klappeinheit oder Schiebeeinheit die zwischen dem ersten Widerlagerelement und der Lagereinheit wirkenden Beanspruchungen.

In einer ersten konstruktiven Ausgestaltungsvariante besitzt die Schiebeeinrichtung eine als Gewindespindel ausgebildete Lineareinheit, die von einem Motoraggregat antreibbar ist.

Eine besonders bevorzugte zweite konstruktive Ausgestaltung zeichnet sich dadurch aus, dass die Verschiebeeinrichtung als Kolben-Zylinder-Aggregat ausgebildet ist mit ihrer Kolbenstange als Lineareinheit und ihrem Zylinder als Lagereinheit.

Das Kolben-Zylinder-Aggregat ist bevorzugt als Gleichlaufzylinderaggregat ausgebildet.

Eine alternative Ausführungsvariante, die im Gegensatz zu der oben genannten Variante eine spielfreie Verriegelung gewährleistet, zeichnet sich dadurch aus, dass der Kolbenraum des Kolben-Zylinder-Aggregats über ein Sperrventil mit Druckmedium beaufschlagbar ist und im verriegelten Zustand die zwischen den Baueinheiten auftretende Beanspruchung von dem ersten Widerlagerelement über die Kolbenstange auf den Zylinder übertragen wird. In dieser Ausführungsvariante wird die auftretende Beanspruchung zwischen dem ersten Widerlagerelement und dem Zylinder über die Kolbenstange übertragen.

Gemäß einer bevorzugten erfindungsgemäßen Weiterbildung wird der Zylinder beziehungsweise die Widerlagerelemente mit einer Einweiserfunktion ausgestattet. Eine vorteilhafte Ausgestaltung ist demgemäß dadurch gekennzeichnet, dass die erste Baueinheit beziehungsweise die Widerlagerelemente und die Lineareinheit beziehungsweise Bauelemente beziehungsweise Querschnittsausbildungen aufweisen, die beim Aufsetzen der Baueinheiten aufeinander im Bedarfsfall eine Einweiserfunktion in Längs- und/oder in Querrichtung ausüben. Die Einweiserfunktion lässt sich gemäß einer bevorzugten Ausgestaltung in besonders einfacher Art und Weise konstruktiv dadurch umsetzen, dass zumindest eine Stirnrandkante der Lineareinheit beziehungsweise des Zylinders bereichsweise eine in Absetzrichtung schräg nach außen fallende Querschnittskontur und das erste beziehungsweise zweite Widerlagerelement eine entsprechende schräg nach innen weisende Gegenquerschnittskontur aufweisen.

Bei einer der Ausführungsvarianten, bei der eine Kolbenstange zur Übertragung der Beanspruchung eingesetzt wird, liegt eine spielfreie Verriegelung vor. Es ist auch möglich, mittels der Klappeinheit oder Schiebeeinheit eine mechanische spielfreie Verriegelung zwischen dem Widerlagerelement und der Lineareinheit beziehungsweise dem Zylinder in Sicherungsposition zu erzielen, indem beispielsweise gemäß einer bevorzugten Ausgestaltung die Vorrichtung derart ausgebildet ist, dass der dem ersten oder zweiten Widerlagerelement zugewandte Seitenbereich der Klappeinheit oder Schiebeeinheit nach innen geneigt ausgebildet ist und der der Klappeinheit oder Schiebeeinheit zugewandte Seitenrandbereich des ersten oder zweiten Widerlagerelements mit einer entsprechenden Gegenneigung ausgebildet ist.

Ein kompakter Aufbau der Verschiebe- und Sperrvorrichtung lässt sich gemäß einer bevorzugten Ausführungsvariante dadurch umsetzen, dass die Klappeinheit an der dem ersten oder zweiten Widerlagerelement zugewandten Stirnseite des Zylinders in Sicherungsposition anliegt.

Eine extrem kurze Bauform kann gemäß einer bevorzugten Ausführungsvariante dadurch umgesetzt werden, dass an dem ersten oder zweiten Widerlagerelement ein Verriegelungsschuh angeordnet ist, der nach dem Durchführen der Relativverschiebung mit einem an dem zweiten Bauteil vorhandenen Niederspanneinheit in Eingriff steht.

Bevorzugt ist das Kolben-Zylinder-Aggregat als Hydraulik-Aggregat ausgebildet, wodurch das bei vielen Fahrzeugen bereits vorhandene Hydrauliksystem leitungs- und schaltungsmäßig eingesetzt werden kann.

Bevorzugt ist die Verschiebeeinrichtung beziehungsweise das Kolben-Zylinder-Aggregat auf einer Konsoleinrichtung angeordnet, die in einfacher Art und Weise an das zweite Bauteil beispielsweise über Schrauben angeschlossen werden kann. Auch die Klappeinheit oder Schiebeeinheit kann an der Konsoleinheit angeschlossen sein, was eine wirtschaftliche Vormontagemöglichkeit bedeutet.

Bei einer alternativen erfindungsgemäßen Verschiebe- und Sperrvorrichtung werden dem Kolben-Zylinder-Aggregat gleichzeitig verschiedene Funktionen zugewiesen. Zum einen dient der Zylinder als Anschlag zum Übertragen von den aus dem ersten Bauteil herrührenden Beanspruchungen auf das zweite Bauteil. Gleichzeitig sorgt das Kolben-Zylinder-Aggregat für eine Verriegelung der beiden Baueinheiten durch Bewirken der Relativverschiebung zwischen den Baueinheiten.

Schließlich kann das Kolben-Zylinder-Aggregat beziehungsweise der Zylinder im Zusammenspiel mit den Widerlagerelementen bei entsprechender Querschnittsausbildung eine Einweiserfunktion beim Aufsetzen der beiden Baueinheiten aufeinander übernehmen.

Das erfindungsgemäße Transportfahrzeug, insbesondere Lastkraftwagen oder Sattelaufleger mit einem Fahrgestell mit Wechselaufbau, ist durch die Merkmale des Anspruchs 24 gegeben. Das Transportfahrzeug zeichnet sich dadurch aus, dass zumindest eine Verschiebe- und Sperrvorrichtung der oben beschriebenen Art vorhanden ist, bei der die erste Baueinheit als Wechselaufbau und die zweite Baueinheit als Fahrgestell beziehungsweise Chassis ausgebildet ist. Bevorzugt ist hierbei eine Verschiebe- und Sperrvorrichtung jeweils auf beiden Längsseiten des Fahrzeugs angeordnet.

Mit der erfindungsgemäßen Verschiebe- und Sperrvorrichtung lassen sich relativ kurze Bauformen auf seiten des Chassis des Fahrzeuges umsetzen. Es wird eine einfache Konstruktion ermöglicht, die gänzlich auf verschleißintensive Lagerungen verzichten kann. Die Konstruktion ist nahezu wartungsfrei und ermöglicht eine äußerst einfache Bedienung. Insgesamt lässt sich eine Konstruktion umsetzen, die kostengünstig hergestellt und montiert werden kann. Die Widerlagerelemente können als gleiche Bauteile hergestellt sein. Weiterhin ergeben sich sehr kurze Montagezeiten, wobei auch eine Vormontage als Baugruppe möglich ist, die sich hinsichtlich der Montagezeit wiederum vorteilhaft auswirkt.

Des Weiteren ist es problemlos möglich, die Verschiebe- und Sperrvorrichtung spielfrei auszubilden, was sich insbesondere bei Sattelaufliegern vorteilhaft auf die Anschlusskonstruktion des Wechselsystems hinsichtlich Beanspruchung und Lebensdauer auswirkt und das Fahrverhalten günstig beeinflusst wird.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht einer ersten Baueinheit und einer zweiten Baueinheit mit Widerlagerelementen und einem Kolben-Zylinder-Aggregat, welche Bauteile eine Verschiebe- und Sperrvorrichtung bilden, im Zustand vor dem Absetzen der ersten Baueinheit auf die zweite Baueinheit,
- Fig. 2: schematische Seitenansicht der Konstruktion gemäß Fig. 1 bei auf die zweite Baueinheit aufgesetzter erster Baueinheit,
- Fig. 3: schematische Seitenansicht der Konstruktion gemäß Fig. 2 nach Durchführung einer Relativverschiebung zwischen den beiden Bauteilen,
- Fig. 4: schematische Seitenansicht der Konstruktion gemäß Fig. 3 nach Betätigung einer Klappeinheit,
- Fig. 5 a), b), c): schematische Seitenansicht, Draufsicht und Längsansicht (durchsichtige Darstellung) einer konstruktiven Ausführungsform der Verschiebe- und Sperrvorrichtung in dem in Fig. 4 dargestellten verriegelten Zustand,
- Fig. 6 a), b), c): schematische Seitenansicht, Draufsicht und Längsansicht (durchsichtige Darstellung) einer konstruktiven Ausführungsform der Verschiebe- und Sperrvorrichtung in dem in Fig. 2 dargestellten verriegelten Zustand,
- Fig. 7 a), b), c): schematische Seitenansicht, Draufsicht und Längsansicht (durchsichtige Darstellung) einer konstruktiven Ausführungsform der Verschiebe- und Sperrvorrichtung in dem in Fig. 1 dargestellten verriegelten Zustand,
- Fig. 8 a), b): schematische Seitenansicht und Draufsicht auf ein Widerlagerelement mit angeschlossenem Verriegelungsschuh und
- Fig. 9: schematische Ansicht einer zwischen einem Widerlagerelement und einem Zylinder spielfrei angeordneten Klappeinheit.

### WEGE ZUM AUSFÜHREN DER ERFINDUNG

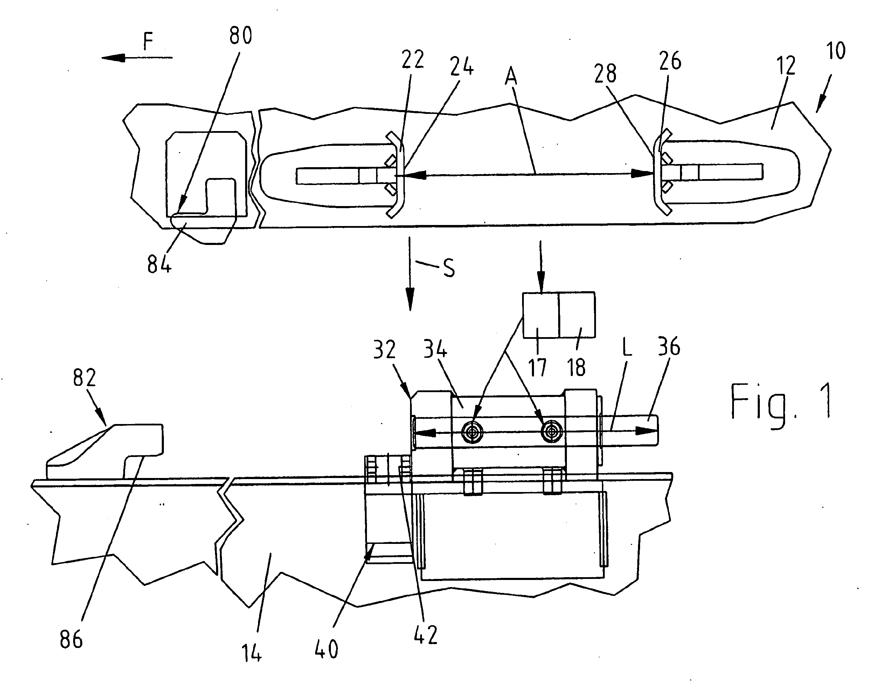

In den Figuren 1 bis 4 ist schematisch in einer Seitenansicht der Verriegelungsvorgang einer ersten, oberseitig angeordneten Baueinheit 12 mit einer zweiten, unterseitig angeordneten Baueinheit 14 mittels einer Verschiebe- und Sperrvorrichtung 10 dargestellt.

Eine in den Figuren 1 bis 4 ausschnittsweise dargestellte erste Baueinheit 12 kann beispielsweise der Hilfsrahmen eines Wechselaufbaus eines Lastkraftwagens sein. Die in den Figuren 1 bis 4 ausschnittsweise dargestellte zweite Baueinheit 14 kann beispielsweise der Chassisträger eines Fahrgestells eines Lastkraftwagens sein.

Die Verriegelung des Wechselaufbaus an dem Chassisträger erfolgt über am Chassisträger vorhandene Verriegelungsschuhe und am Wechselaufbau vorhandene Niederspanner. Jeder Verriegelungsschuh besitzt eine entgegen der Fahrtrichtung offene Ausnehmung, in die der entsprechende Niederspanner in verriegeltem Zustand eingreift. Damit ist der Wechselaufbau gegen Abheben und Verrutschen in Fahrtrichtung gesichert. Eine Verriegelung entgegen der Fahrtrichtung hat gesondert zu erfolgen. Damit die Niederspanner mit den Verriegelungsschuhen in Eingriff kommen beziehungsweise wieder gelöst werden können, muss der Wechselaufbau relativ zum Chassisträger eine Verschiebebewegung durchführen. Diese Verschiebebewegung wird durch die nachfolgend beschriebene Verschiebe- und Sperrvorrichtung 10 umgesetzt, wobei die Verschiebe- und Sperrvorrichtung 10 gleichzeitig gegen Verrutschen entgegen der Fahrtrichtung verriegelt.

Als Bestandteil der Verschiebe- und Sperrvorrichtung 10 ist an der ersten Baueinheit 12 ein erstes Widerlagerelement 22 mit einer ersten Innenanschlagfläche 24 und gemäß Figur 1 horizontal beabstandet im Abstand A ein zweites Widerlagerelement 26 mit einer zweiten Innenanschlagfläche 28 angeschlossen.

An der zweiten Baueinheit 14 ist ein Kolben-Zylinder-Aggregat 32 mit einem Zylinder 34 und einer Kolbenstange 36 angeschlossen. Das Kolben-Zylinder-Aggregat 32 ist an ein in den Figuren 1 bis 4 stark schematisiertes Hydrauliksystem 17 mit Steuereinrichtung 18 angeschlossen.

Die Länge L der Kolbenstange 36 ist geringfügig kleiner gewählt als der Abstand A zwischen dem ersten und zweiten Widerlagerelement 22, 26.

Zum Verriegeln der ersten Baueinheit 12 mit der zweiten Baueinheit 14 wird wie folgt vorgegangen:

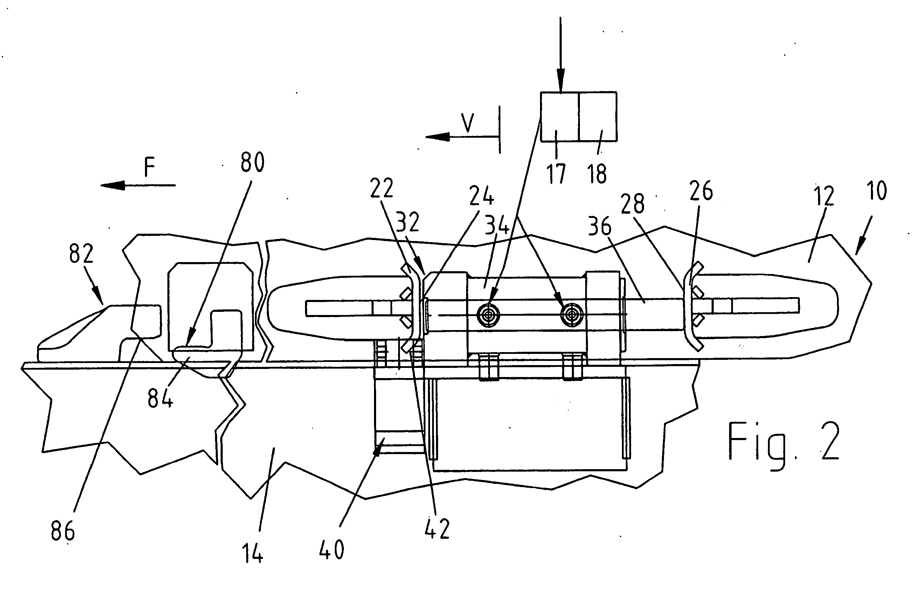

Die erste Baueinheit 12 (Hilfsrahmen des Wechselaufbaus) befindet sich in der in Figur 1 angegebenen Höhenlage. Danach wird die zweite Baueinheit (Chassisträger des Fahrgestells des Lastkraftwagens) in Längsrichtung in die in Figur 1 dargestellte Position durch Verfahren des Chassisträgers (LKW) unter den Wechselaufbau verbracht, das heißt, das Kolben-Zylinder-Aggregat 32 befindet sich in einer Position, derart, dass sich nach dem Absenken der ersten Baueinheit 12 (Pfeilrichtung S gemäß Figur 1) das Kolben-Zylinder-Aggregat 32 innerhalb des ersten und zweiten Widerlagerelements 22, 26 befindet. Hierzu sind in den Figuren nicht dargestellte Einweisereinheiten am Fahrzeug und am Wechselaufbau vorhanden, die die Positionierung gewährleisten/erleichtern. Dieser Zustand ist in Figur 2 schematisch dargestellt.

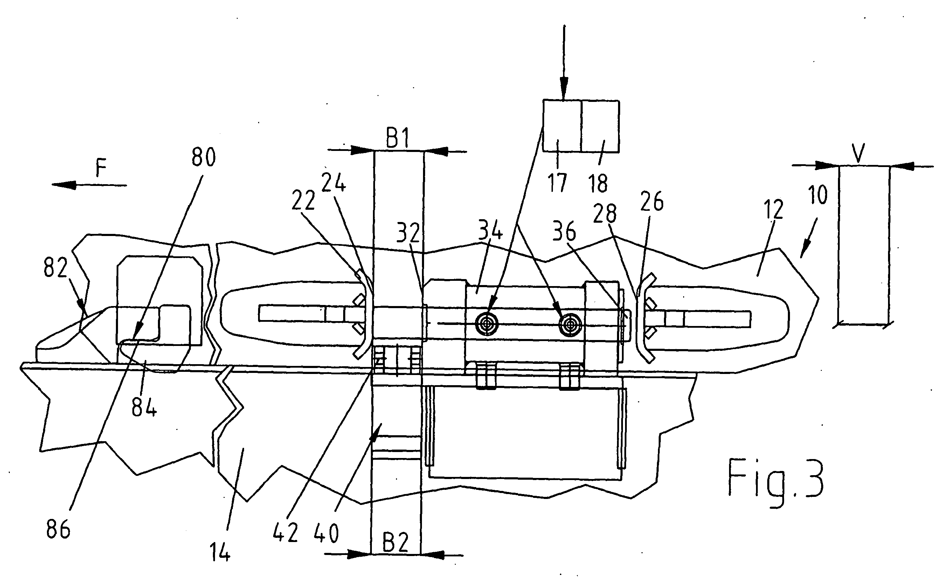

Daran anschließend wird der Kolbenraum des Kolben-Zylinder-Aggregats 32 über das Hydrauliksystem 17 mit Steuereinrichtung 18 derart mit Druck beaufschlagt, dass die Kolbenstange 36 gemäß Figur 2 nach links ausfährt, damit mit der ersten Innenanschlagfläche 24 des ersten Widerlagerelements 22 zur Anlage kommt und in der Folge die erste Baueinheit 12 um das Maß der Relativverschiebung V gemäß Figur 2 nach links verschiebt. Dieser Zustand ist in Figur 3 dargestellt.

Nachdem die erste Baueinheit 12 gegenüber der zweiten Baueinheit 14 um das Maß V nach links verschoben worden ist, ist zwischen der ersten Innenanschlagfläche 24 des ersten Widerlagerelements 22 und der linken Stirnfläche des Zylinders 34 ein Zwischenraum der Breite B1 gebildet (Figur 3). Unterseitig ist an der zweiten Baueinheit 14 auf Höhe des Zwischenraums eine um eine Drehachse 42 drehbare Klappeinheit 40 vorhanden, die eine Breite B2 aufweist, die geringfügig kleiner ist als die Breite B1 des Zwischenraums. Die Klappeinheit 40 wird in den beschriebenen Zwischenraum geklappt. Der Kolbenraum des Kolben-Zylinder-Aggregats 32 ist in diesem Zustand drucklos geschaltet. Treten nun Beanspruchungen auf, die ein Abrutschen der ersten Baueinheit 12 von der zweiten Baueinheit 14 entgegen der Fahrtrichtung F bewirken wollen, werden diese Beanspruchungen von der ersten Innenanschlagfläche 24 des ersten Widerlagerelements 22 über die Klappeinheit 40 auf den Zylinder 34 und damit auf die zweite Baueinheit 14 abgetragen. Die erste Baueinheit 12 ist damit gegen Verrutschen entgegen der Fahrtrichtung F zuverlässig verriegelt.

Es ist auch möglich anstelle einer Klappeinheit eine Schiebeeinheit zwischen das erste Widerlagerelement und den Zylinder einzuschieben, die dann die oben beschriebene Aufgabe der Klappeinheit übernimmt. Die Schiebeeinheit kann in nicht benötigtem Zustand lose vorhanden sein. Es ist auch möglich, die Schiebeeinheit beispielsweise über eine Linarführung einschiebbar manuell oder antreibbar zu betätigen.

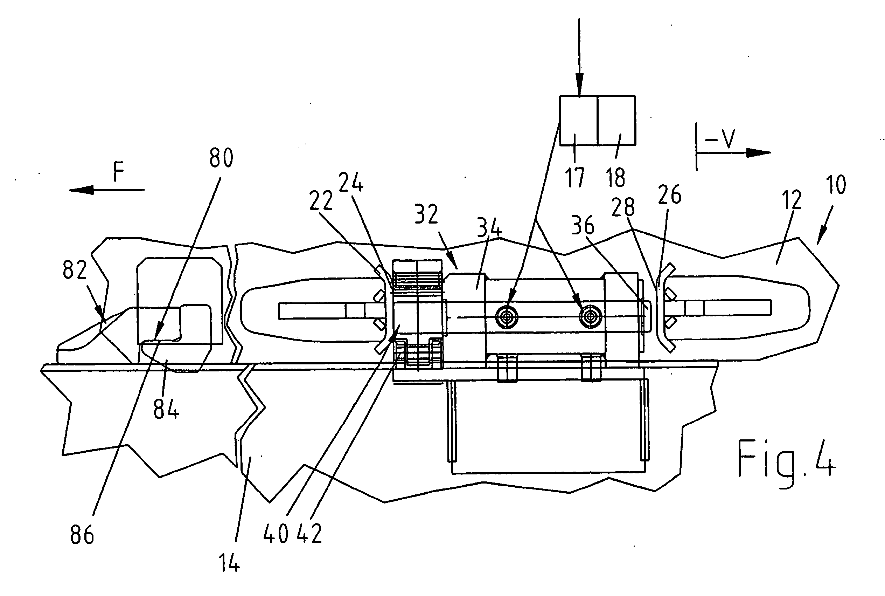

Der letztgenannte Zustand ist in Figur 4 schematisch dargestellt.

Die Klappeinheit 40 hat jedoch nicht nur die Aufgabe, die Beanspruchung vom ersten Widerlagerelement 22 auf den Zylinder 34 zu übertragen sondern schützt auch die Kolbenstange vor Verschmutzung und Beschädigung (Steinschlag).

Die Länge L der Kolbenstange 36 ist so bemessen, dass in dem Zustand gemäß Figur 4 die rechte Stirnseite der Kolbenstange 36 nicht mit der zweiten Innenanschlagfläche 28 des zweiten Widerlagerelements 26 zur Anlage kommt.

Die in den Figuren 1 bis 4 dargestellte Verschiebe- und Sperrvorrichtung 10 weist für eine Verriegelung entgegen der Fahrtrichtung F ein geringfügiges Spiel auf.

Für eine Verriegelung in Fahrtrichtung F kann das bewährte bekannte Verriegelungsschuhkonzept eingesetzt werden, was in den Figuren 1 bis 4 im linken Bereich der Baueinheiten 12, 14 dargestellt ist. So ist an der ersten Baueinheit 12 ein Verriegelungsschuh 80 angeschlossen, der einen in Fahrtrichtung weisenden Schenkel 84 besitzt. Entsprechend ist am zweiten Bauteil 14 ein Gegenverriegelungsschuh 82 mit einem entgegen der Fahrtrichtung F weisenden Schenkel 86 vorhanden. Nachdem die erste Baueinheit 12 auf der zweiten Baueinheit 14 abgesetzt ist und die erste Baueinheit 12 gegenüber der zweiten Baueinheit 14 aufgrund der Beaufschlagung des Kolben-Zylinder-Aggregts 32 die Relativverschiebung V durchgeführt hat, untergreift der Schenkel 84 des Verriegelungsschuhs 80 den Schenkel 86 des Gegenverriegelungsschuhs 82. Dadurch ist die erste Baueinheit 12 gegen eine Verschiebung in Fahrtrichtung F zuverlässig verriegelt. Gleichzeitig ist eine Abhebesicherung gegeben.

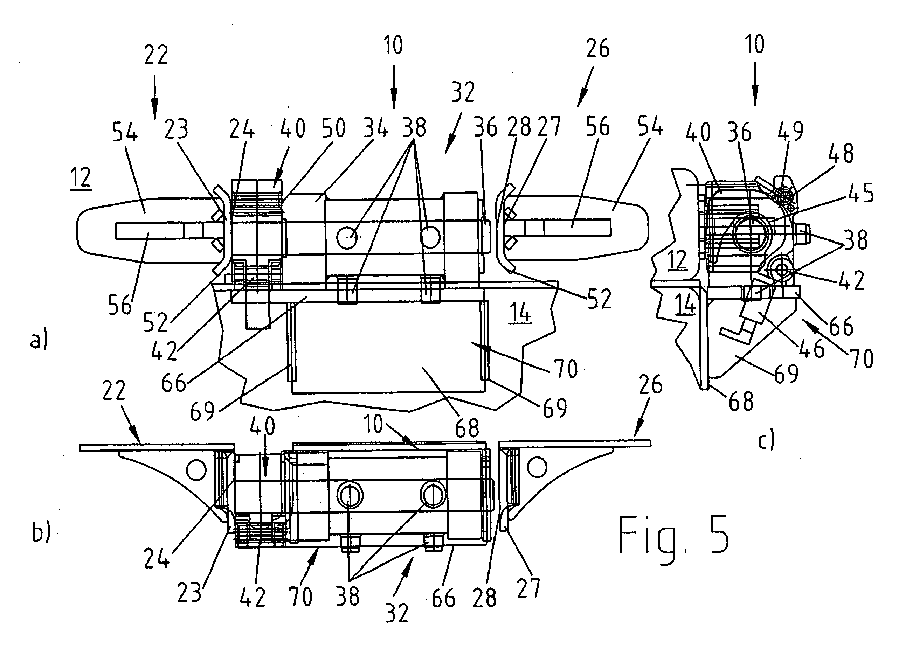

In den Figuren 5 bis 7 ist ein konstruktives Ausführungsbeispiel einer Verschiebe- und Sperrvorrichtung 10 dargestellt. Von der physikalischen Funktion her gleichwirkende Bauelemente wie die bereits in den Figuren 1 bis 4 beschriebenen Bauelemente tragen dasselbe Bezugszeichen und werden nicht nochmals detailliert beschrieben.

Das erste Widerlagerelement 22 und das zweite Widerlagerelement 26 ist konstruktiv gleich ausgebildet. Beide Widerlagerelemente 22, 26 sind als L-förmiges Profilelement mit einer Basisplatte 54 und einem senkrecht zur Basisplatte 54 verlaufenden ersten Widerlagerschenkel 23 beziehungsweise zweiten Widerlagerschenkel 27 ausgebildet. Zwischen der Basisplatte 54 und den Widerlagerschenkeln 23, 27 ist mittig ein dreieckförmiges Aussteifungsblech 56 eingeschweißt. Der Anschluss der Basisplatte 54 an die erste Baueinheit 12 erfolgt beispielsweise über nicht näher dargestellte Schraubeinheiten, Schweißnähte oder sonstige Verbindungsmittel.

Der Zylinder 34 des Kolben-Zylinder-Aggregats 32 ist über nicht näher dargestellte Schraubverbindungen oder Schweißverbindungen oder dergleichen oberseitig an einen ersten Schenkel 66 einer im Querschnitt L-förmigen Konsoleinheit 70 angeschlossen, die über ihren zweiten, nach unten weisenden Schenkel 68 an die zweite Baueinheit 14 über nicht näher dargestellte Schraubverbindungen angeschlossen ist. In den stirnseitigen Endbereichen der Konsoleinheit 70 ist jeweils ein dreieckförmiges Aussteifungsblech 69 zwischen dem ersten Schenkel 66 und dem zweiten Schenkel 68 eingeschweißt.

In Figur 5 c) ist die Querschnittsausbildung der Klappeinheit 40 zu erkennen. Die Klappeinheit 40 besitzt eine teilkreisförmige offene Ausnehmung 45, die in Sicherungsposition gemäß Figur 5 c) die Kolbenstange 36 teilkreisförmig umschließt. Die Querschnittsverteilung der Klappeinheit 40 ist so gewählt, dass bei der Bewegung der Klappeinheit 40 von der offenen in die geschlossene (Sicherungs-) Position nach Erreichen eines Totpunktes diese aufgrund der Wirkung ihres Eigengewichts in die in der Figur 5 c) dargestellte Sicherungsposition fällt. Als zusätzliche Sicherungsmaßnahme zur Arretierung der Klappeinheit 40 in Sicherungsposition ist ein verschiebbarer Sicherungsriegel 48 vorhanden, der in eine Ausnehmung 49 an der Klappeinheit 40 lösbar eingeschoben werden kann.

In Figur 5 c) ist unterhalb der Klappeinheit 40 ein Positionsdetektor 46 angeordnet, der die jeweilige Position der Klappeinheit 40 detektiert. Die von dem Positionsdetektor 46 abgegebenen Signale können zu Steuerungszwecken eingesetzt werden. So kann beispielsweise bei fehlender Sicherungsposition der Klappeinheit 40 ein optisches oder akkustisches Signal abgegeben werden. Darüber hinaus kann der Positionsdetektor 46 zu Zwecken der automatischen Bewegung der Klappeinheit 40 durch Ansteuerungsaggregate in Verbindung mit einer Steuereinrichtung eingesetzt werden.

Wie in den Figuren 5 a) und b) zu erkennen ist, liegt der rechte Stirnendbereich der Kolbenstange 36 nicht an der zweiten Innenanschlagfläche 28 des zweiten Widerlagerelements 26 an. Die auf die erste Baueinheit 12 entgegen der Fahrtrichtung F wirkende Beanspruchung (zum Beispiel infolge Anfahrens oder Bergauffahrens) wird von dem ersten Widerlagerelement 22 auf die Klappeinheit 40 übertragen, die diese Beanspruchung wiederum an den Zylinder 34 abgibt, der über die Konsoleinrichtung 70 an der zweiten Baueinheit 14 gelagert ist. Dadurch ist eine zuverlässige Verriegelung entgegen der Fahrtrichtung F der ersten Baueinheit 12 an der zweiten Baueinheit 14 gegeben.

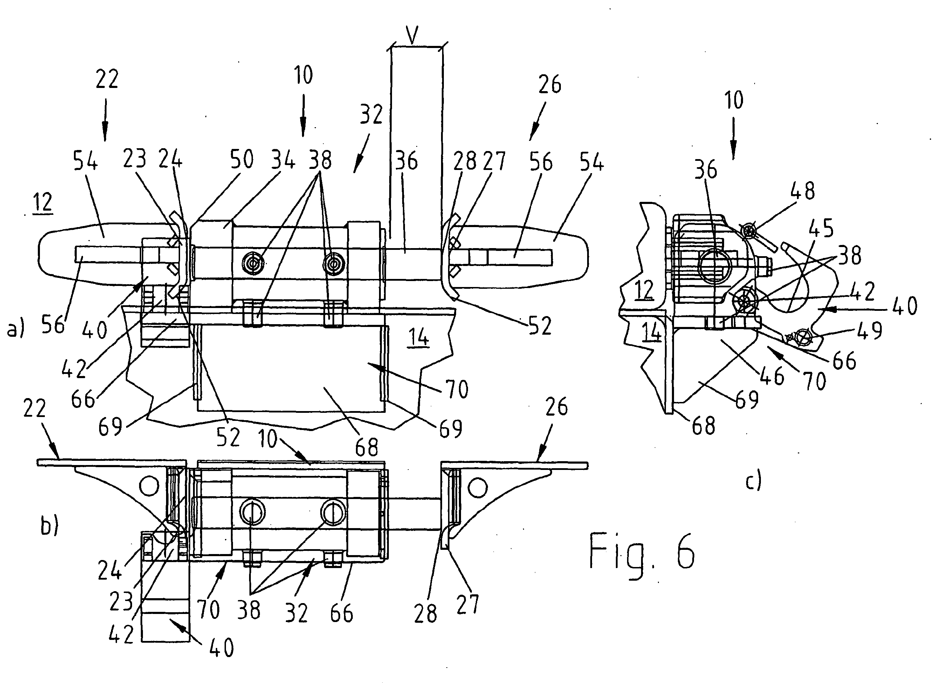

Die entriegelte Situation bei aufgesetzter erster Baueinheit 12 ist in den Figuren 6 a) bis c) schematisch dargestellt. Bevor der Entriegelungsvorgang eingeleitet wird, muss die Klappeinheit 40 von ihrer Sicherungsposition gemäß Figur 5 c) in die entsicherte Position gemäß Figur 6 c) geschwenkt werden. Dies kann beispielsweise manuell erfolgen. Es kann jedoch sein, dass auf die Klappeinheit 40 infolge einer Bergfahrt oder eines starken Anfahrens aufgrund einer möglichen, geringfügigen Relatiwerschiebung zwischen erster Baueinheit 12 und zweiter Baueinheit 14 eine gewisse Klemmkraft einwirkt. Daher wird bevorzugt über die Steuereinheit zu Beginn des Entriegelungsvorgangs die Kolbenstange 36 geringfügig nach links verschoben, sodass die die Klappeinheit 40 entlastet wird und ein Öffnen problemlos möglich ist. Nachdem die Klappeinheit 40 in die in Figur 6 c) dargestellte Position geschwenkt ist, veranlasst die Steuereinrichtung unter Druckbeaufschlagung der Kolbenkammer des Kolben-Zylinder-Aggregats 32, dass die Kolbenstange 36 nach rechts ausfährt, dadurch mit der zweiten Innenanschlagfläche 28 des zweiten Widerlagerelements 26 in Kontakt kommt und in der Folge die erste Baueinheit 12 relativ zur zweiten Baueinheit 14 um das Maß - V nach rechts verschoben wird. In diesem Zustand kann die erste Baueinheit 12 entgegen der Absetzrichtung S (siehe Figur 1) nach oben angehoben werden und die beiden Baueinheiten 12, 14 kommen außer Eingriff.

In Figur 6 a) und b) ist die Klappeinheit 40 aus Übersichtlichkeitsgründen nicht dargestellt.

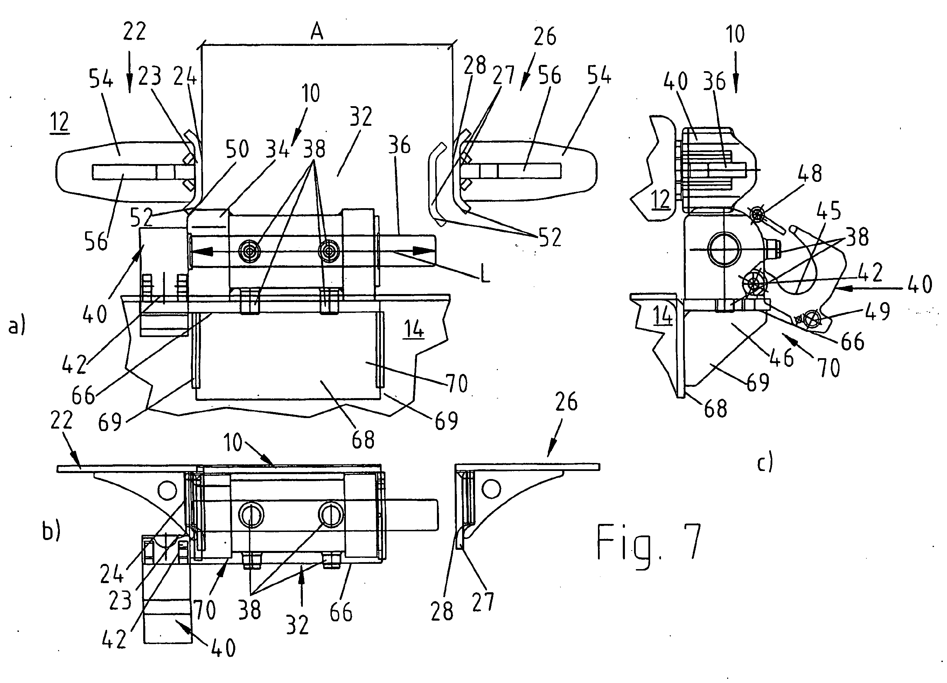

In den Figuren 7 a) bis c) ist ein Zustand dargestellt, bei dem das zweite Bauteil 14 gegenüber dem ersten Bauteil 12 vor dem Verriegelungsvorgang in Fahrtrichtung F nicht exakt positioniert ist. Eine "falsche" Positionierung kann - in gewissen Größenordnungen - durch die vorhandene Einweiserfunktion des Zylinders 34 des Kolben-Zylinder-Aggregats 32 in Verbindung mit dem ersten Widerlagerelement 22 beim Aufsetzvorgang ausgeglichen werden. Hierzu besitzt der Zylinder 34 bereichsweise in seiner linken oberen Stirnrandkante eine nach außen geneigte Querschnittskontur 50, die beim Absetzvorgang auf eine entsprechend geneigte Gegenquerschnittskontur 52 im unteren Stirnrandbereich des ersten Widerlagerschenkels 23 des ersten Widerlagerelements 22 trifft. In den Figuren 7 a) und b) ist die Klappeinheit 40 in ihrer Offen-Stellung gemäß Figur 7 c) aus Übersichtlichkeitsgründen nicht dargestellt.

Die in den Figuren 7 a) und b) dargestellten Einweiserfunktionen aufgrund der Ausbildung der Querschnittskontur 50 des Zylinders 34 und der Gegenquerschnittskontur 52 des ersten Widerlagerelements 22 wirken in Längsrichtung. Es können jedoch auch Einweisereinheiten vorhanden sein, die eine "falsche" Positionierung - in vorgegebenen Größenordnungen - auch in Querrichtung im Zusammenspiel mit einer entsprechenden Querschnittskontur des Zylinders 34 beim Absetzvorgang korrigieren.

In Figur 7a ist darüber hinaus ergänzend der zweite Widerlagerschenkel 27 des zweiten Widerlagerelements 26 in gestrichelter "Fehlposition" dargestellt. Beim Absetzvorgang trifft nun der zweite Widerlagerschenkel 27 auf die nach rechts ausgefahrene Kolbenstange 36. Die linke Druckkammer des Kolben-Zylinder-Aggregats 32 ist jedoch in diesem Zustand drucklos geschaltet, so dass aufgrund der geneigten Gegenquerschnittskontur 52 des zweiten Widerlagerschenkels 27 die Kolbenstange 36 in Figur 7a nach links weggedrückt wird und den weiteren Absetzvorgang nicht behindert.

Bei der konstruktiven Ausführungsform der Verschiebe- und Sperrvorrichtung 10 gemäß den Figuren 5 bis 7 übernimmt die Klappeinheit 40 die Übertragung einer Beanspruchung der ersten Baueinheit 12 entgegen der Fahrtrichtung F auf den Zylinder 34 und damit über die Konsoleinheit 70 auf die zweite Baueinheit 14. Aufgrund der konstruktiven Gegebenheiten ist hier immer ein gewisses, jedoch geringfügiges Spiel vorhanden. Dieses "Spiel" ist jedoch bei Wechselaufbauten, die zum Transport von Sattelaufliegern oder anderen Aufbauten, die äußere Krafteinwirkungen mit sich bringen, verwendet werden nicht erwünscht, da dies zu zusätzlichen Beanspruchungen führt.

Die Umsetzung einer spielfreien Verriegelung ist jedoch mit einer erfindungsgemäßen alternativen Verschiebe- und Sperrvorrichtung möglich, die in den Figuren nicht näher dargestellt ist. Der prinzipielle Aufbau einer derartigen Verschiebe- und Sperrvorrichtung gleicht im Wesentlichen der Verschiebe- und Sperrvorrichtung 10 gemäß den Figuren 5 bis 7. Jedoch ist es bei dieser Vorrichtung so, dass der Kolbenraum des Kolben-Zylinder-Aggregats über ein Sperrventil mit dem Hydrauliksystem verbunden ist. Dies bedeutet, dass die Kolbenstange 36 permanent auf die erste Innenanschlagfläche des ersten Widerlagerelements 22 drückt, sodass entgegen der Fahrtrichtung auftretende Beanspruchungen spielfrei von dem ersten Widerlagerelement 22 über die Kolbenstange 36 auf den Zylinder 34, damit auf die Konsoleinheit 70 und damit auf die zweite Baueinheit 14 übertragen werden. Die Klappeinheit 40 übernimmt in diesem Fall lediglich eine Sicherungsfunktion gegen Lösen des Aufbaus bei Ausfall des hydraulischen Systems (Verliersicherung).

In den Figuren 5 a) bis c) sind die am Außenumfang des Zylinders 34 vorhandenen zwei Anschlusseinheiten zum entsprechenden Beaufschlagen des Kolbenraums über das Hydrauliksystem mit dem Bezugszeichen 38 versehen.

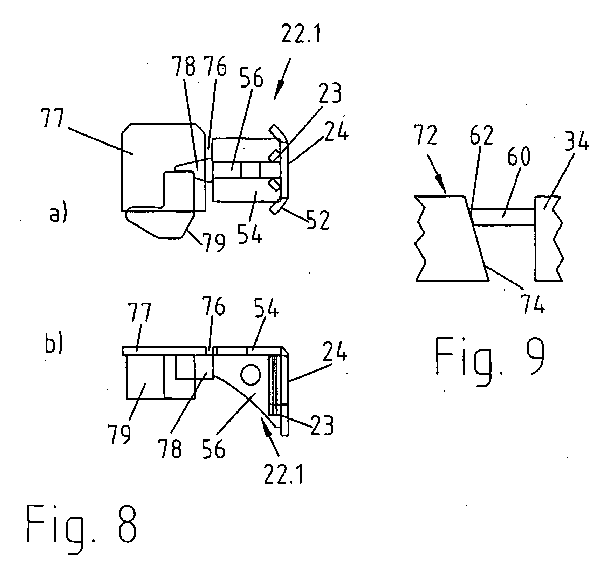

In den Figuren 8a und 8b ist ein verkürztes erstes Widerlagerelement 22.1 dargestellt, dass gegenüber dem ersten Widerlagerelement 22 eine kürzere Basisplatte 54 aufweist. Am linken Stirnrand der Basisplatte 54 ist über eine Schweißnaht 88 eine Lagerplatte 77 angeschweißt, an der der Verriegelungsschuh 79 befestigt ist, der im verriegeltem Zustand den am Chassis vorhandenen Niederspanner untergreift. Gleichzeitig ist an der Lagerplatte 77 und an dem Verriegelungsschuh 79 und dem Aussteifungsblech 56 des zweiten Widerlagerelements 22.1 ein Verbindungselement 78 angeschweißt, das zur zuverlässigen Übertragung der bei Beanspruchung entstehenden Kräfte an den Verriegelungsschuh 79 auf das erste Widerlagerelement 22.1 beiträgt.

In Figur 9 ist schematisch ausschnittsweise die konstruktive Ausgestaltung einer spielfreien Lagerung einer Klappeinheit 60 dargestellt. Hierzu weist der linke Seitenwandbereich 62 der Klappeinheit 60 eine Neigung auf, wobei der Seitenbereich 74 eines ersten Widerlagerelements 72 eine entsprechende Gegenneigung aufweist. Aufgrund des Eigengewichts der Klappeinheit 60 ist immer gewährleistet, dass der Seitenbereich 62 der Klappeinheit 60 an dem Seitenbereich 74 des ersten Widerlagerelements 72 anliegt. Eine geneigte Seitenrandausbildung ist auch am rechten Seitenrand der Klappeinheit denkbar, was in Figur 9 nicht dargestellt ist. Hierzu besitzt dann auch der Zylinder 34 eine entsprechende geneigte Gegenflanke.

Ein besonders großer Vorteil der Vorrichtung 10 besteht darin, dass sie als integrierter Schiebe- und Verriegelungsblock (Sicherung gegen Verrutschen entgegen Fahrtrichtung) als kompaktes Bauteil ausbildbar ist. Somit liegt für Lastkraftwagen mit Wechselbau eine neuartige Kombiverriegelung vor, wobei in einem Bauteil integriert folgende Abläufe umsetzbar sind: schieben, mitnehmen, einweisen, wieder verschieben. Lediglich das Ent- und Verriegeln der Klappeinheit erfolgt manuell oder alternativ mittels eines Aggregats.

Der große Vorteil, dass diese Funktionen integriert vorhanden sind, wirkt sich in hoher Funktionssicherheit (Sicherheit im Funktionsablauf) und bei der Montage am LKW-Fahrgestell aus, da nur eine Positionierung für die Vorrichtung (Kombiverriegelung) vorgenommen werden muss, anstatt mehrfacher Positionierung von Verriegelung, Schiebezylinder, Einweiser, wofür sich bei den heutigen LKW-Fahrgestellen kaum noch freie Anbaustellen finden lassen.

## Patentansprüche

1. Verschiebe- und Sperrvorrichtung (10) zum lösbaren Verriegeln einer ersten Baueinheit (12) mit einer zweiten Baueinheit (14), wobei zum Ver- beziehungsweise Entriegeln eines Verriegelungsmechanismus eine Relativverschiebung (V, -V) beider Baueinheiten (12; 14) erfolgt und anschließend die Baueinheiten (12, 14) voneinander getrennt beziehungsweise aufeinander abgesetzt werden, insbesondere für einen Lastkraftwagen, Anhänger, Sattelauflieger oder dergleichen, jeweils mit Wechselaufbau, mit - einem ersten Widerlagerelement (22) und einem zweiten Widerlagerelement (26), die beabstandet (A) an der ersten Baueinheit (12) befestigbar sind,
- einer über eine Steuereinrichtung (18) ansteuerbare Verschiebeeinrichtung (32), die an der zweiten Baueinheit (14) befestigbar ist, wobei
- im aufgesetzten Zustand der Baueinheiten (12; 14) die Verschiebeeinrichtung (32) zwischen beiden Widerlagerelementen (22; 26) angeordnet ist, derart, dass die Verschiebeeinrichtung (32) auf die Widerlagerelemente (22; 26) zum Bewirken einer Relativbewegung der beiden Baueinheiten (12; 14) einwirken kann,
**dadurch gekennzeichnet, dass**
- die Verschiebeeinrichtung (32) eine in einer Lagereinheit (34) längsverschieblich gelagerte profilstangenförmige Lineareinheit (36) aufweist,
- die Lagereinheit (34) der Verschiebeeinrichtung (32) im verriegelten Zustand ein Gegenwiderlagerelement zum ersten beziehungsweise zweiten Widerlagerelement (22; 26) bildet und
- das erste Widerlagerelement (22) eine erste Innenanschlagfläche (24) und das zweite Widerlagerelement (26) eine zweite Innenanschlagfläche (28) aufweist, wobei jeweils die Endstirnflächen der Lineareinheit (36) der Verschiebeeinrichtung (32) zum Durchführen der Relativverschiebung (V, -V) auf die erste beziehungsweise zweite Innenanschlagfläche (24; 28) einwirkt.

2. Verschiebe- und Sperrvorrichtung nach Anspruch 1,
**dadurch gekennzeichnet, dass**
- eine Klappeinheit (40) oder Schiebeeinheit vorhanden ist, die im verriegelten Zustand der aufeinander abgesetzten Baueinheiten (12; 14) zwischen die Lagereinheit (34) und das erste beziehungsweise zweite Widerlagerelement (22; 26) klappbar beziehungsweise schiebbar ist.

3. Verschiebe- und Sperrvorrichtung nach Anspruch 2,
**dadurch gekennzeichnet, dass**
- die Klappeinheit (40) oder Schiebeeinheit manuell betätigbar ausgebildet ist.

4. Verschiebe- und Sperrvorrichtung nach Anspruch 2,
**dadurch gekennzeichnet, dass**
- die Klappeinheit (40) oder Schiebeeinheit über ein Aggregat ansteuerbar betätigbar ist.

5. Verschiebe- und Sperrvorrichtung nach einem oder mehreren der Ansprüche 2 bis 4,
**dadurch gekennzeichnet, dass**
die Klappeinheit (40; 60) oder Schiebeeinheit als um eine Drehachse (42) drehbar gelagerte Klappeinheit (40; 60) oder Schiebeeinheit ausgebildet ist, die in Sicherungsposition die ausgefahrene Lineareinheit (36) der Verschiebeeinrichtung (32) bereichsweise, insbesondere formschlüssig umgibt.

6. Verschiebe- und Sperrvorrichtung nach einem oder mehreren der Ansprüche 2 bis 5,
**dadurch gekennzeichnet, dass**
- die Klappeinheit (40) oder Schiebeeinheit in der Sicherungsposition durch einen Sicherungsriegel (48) arretierbar ist.

7. Verschiebe- und Sperrvorrichtung nach einem oder mehreren der Ansprüche 2 bis 6,
**dadurch gekennzeichnet, dass**
- ein Positionsdetektor (26) für die Position der Klappeinheit (40) oder Schiebeeinheit vorhanden ist, der entsprechend der Position der Klappeinheit (40; 60) oder Schiebeeinheit Signale an eine Steuereinrichtung abgibt.

8. Verschiebe- und Sperrvorrichtung nach einem oder mehreren der Ansprüche 2 bis 7,
**dadurch gekennzeichnet, dass**
- die Klappeinheit (40) oder Schiebeeinheit in Sicherungsposition zwischen dem ersten widerlagerelement (22) oder zweiten Widerlagerelement (26) und dem Zylinder (34) vorhanden ist und die im Verriegelungszustand auftretenden Beanspruchungen zwischen den beiden Baueinheiten (12; 14) von dem ersten oder zweiten Widerlagerelement (22, 26) bevorzugt über die Klappeinheit. (40; 60) oder Schiebeeinheit auf die Lagereinheit (34) übertragen werden.

9. Verschiebe- und Sperrvorrichtung nach einem oder mehreren der vorstehenden Ansprüche,
**dadurch gekennzeichnet, dass**
die Verschiebeeinrichtung eine als Lineareinheit ausgebildete Gewindespindel aufweist, die von einem Motoraggregat antreibbar ist.

10. Verschiebe- und Sperrvorrichtung nach einem oder mehreren der Ansprüche 1 bis 8,
**dadurch gekennzeichnet, dass**
- die Verschiebeeinrichtung als Kolben-Zylinder-Aggregat (32) ausgebildet ist mit ihrer Kolbenstange (34) als Lineareinheit und ihrem Zylinder (34) als Lagereinheit.

11. Verschiebe- und sperrvorrichtung nach Anspruch 10,
**dadurch gekennzeichnet, dass**
- das Kolben-Zylinder-Aggregat (32) als Gleichlaufzylinderaggregat ausgebildet ist.

12. Verschiebe- und Sperrvorrichtung nach Anspruch 10 oder 11,
**dadurch gekennzeichnet, dass**
- der Kolbenraum des Kolben-Zylinder-Aggregats über ein Sperrventil mit Druckmedium beaufschlagbar ist und im verriegelten Zustand die zwischen den Baueinheiten (12; 14) auftretenden Beanspruchungen von dem ersten Widerlagerelement (22) über die Kolbenstange (36) auf den. Zylinder (34) übertragen werden.

13. Verschiebe- und Sperrvorrichtung nach einem oder mehreren der vorstehenden Ansprüche,
**dadurch gekennzeichnet, dass**
- die erste Baueinheit (12) beziehungsweise die Widerlagerelemente (22; 26) und die Lineareinheit beziehungsweise der Zylinder (34) Bauelemente beziehungsweise Querschnittsausbildungen (62; 74), insbesondere geneigte Flanken, aufweisen, die beim Aufsetzen der Baueinheiten (12; 14) aufeinander im Bedarfsfall eine Einweiserfunktion bevorzugt in Längs- und/oder in Querrichtung der Relativverschiebung (V, -V) ausüben.

14. Verschiebe- und Sperrvorrichtung nach Anspruch 10,
**dadurch gekennzeichnet, dass**
- zumindest eine Stirnrandkante der Lineareinheit beziehungsweise des Zylinders (34) bereichsweise eine in Absetzrichtung (S) schräg nach außen fallende Querschnittskontur (50) und das erste beziehungsweise zweite Widerlagerelement (22; 26) eine entsprechende schräg nach innen weisende Gegenquerschnittskontur (52) aufweisen.

15. Verschiebe- und Sperrvorrichtung nach Anspruch 5, 6, 7 oder 8,
**dadurch gekennzeichnet, dass**
- die Klappeinheit (60) oder Schiebeeinheit mechanisch spielfrei zwischen dem ersten oder zweiten Widerlagerelement (22; 26) und der Lineareinheit beziehungsweise dem Zylinder (34) in Sicherungsposition vorhanden ist.

16. Verschiebe- und Sperrvorrichtung nach Anspruch 15,
**dadurch gekennzeichnet, dass**
- der dem ersten oder zweiten Widerlagerelement (22; 26) zugewandte Seitenbereich (62) der Klappeinheit (60) oder Schiebeeinheit nach innen geneigt ausgebildet ist und der der Klappeinheit (60) oder Schiebeeinheit zugewandte Seitenrandbereich (74) des ersten oder zweiten Widerlagerelements (72) mit einer entsprechenden Gegenneigung ausgebildet ist.

17. Verschiebe- und Sperrvorrichtung nach Anspruch 8, 15 oder 16,
**dadurch gekennzeichnet, dass**
- die Klappeinheit (44, 60) oder Schiebeeinheit in Sicherungsposition an der dem ersten oder zweiten Widerlagerelement (22; 26) zugewandten Stirnseite des Zylinders (34) anliegt.

18. Verschiebe- und Sperrvorrichtung nach einem oder mehreren der vorstehenden Ansprüche,
**dadurch gekennzeichnet, dass**
- an dem ersten oder zweiten Widerlagerelement (22; 26) ein Verriegelungsschuh angeordnet ist, der nach dem Durchführen der Relativverschiebung (V) mit einer an dem zweiten Bauteil (14) vorhandenen Niederspanneinheit in Eingriff steht.

19. Verschiebe- und Sperrvorrichtung nach einem oder mehreren der vorstehenden Ansprüche 10 bis 18,
**dadurch gekennzeichnet, dass**
- das Kolben-Zylinder-Aggregat (32) als Hydraulik-Aggregat ausgebildet ist.

20. Verschiebe- und Sperrvorrichtung nach einem oder mehreren der vorstehenden Ansprüche,
**dadurch gekennzeichnet, dass**
- die Verschiebeeinrichtung beziehungsweise das Kolben-Zylinder-Aggregat (32) auf einer an die zweite Baueinheit (14) anschließbaren Konsoleinheit (16) angeordnet ist.

21. Verschiebe- und Sperrvorrichtung nach Anspruch 20,
**dadurch gekennzeichnet, dass**
- an der Konsoleinheit (16) die Klappeinheit (40) oder Schiebeeinheit angeschlossen ist.

22. Verschiebe- und Sperrvorrichtung nach einem oder mehreren der vorstehenden Ansprüche,
**dadurch gekennzeichnet, dass**
- die Länge (L) der Lineareinheit (36) geringfügig kleiner ist als der Abstand (A) der Widerlagerelemente (22; 24).

23. Transportfahrzeug, insbesondere Lastkraftwagen, Anhänger, Sattelauflieger oder dergleichen mit einem Fahrgestell mit Wechselaufbau,
**dadurch gekennzeichnet, dass**
- zumindest eine Verschiebe- und Sperrvorrichtung nach einem oder mehreren der vorstehenden Ansprüche vorhanden ist, wobei die erste Baueinheit (12) als Wechselaufbau und die zweite Baueinheit (14) als Fahrgestell ausgebildet ist.

24. Transportfahrzeug nach Anspruch 23,
**dadurch gekennzeichnet, dass**
jeweils zumindest eine Verschiebe- und Sperrvorrichtung an den Seitenlängsbereichen des Fahrzeugs angeordnet ist.

## Claims

1. Displacement and locking device (10) for releasably locking a first assembly (12) to a second assembly (14), wherein, in order to lock or unlock a locking mechanism, a relative displacement (V, -V) of the two assemblies (12; 14) takes place, and the assemblies (12, 14) are subsequently separated from one another or put down one onto the other, in particular for a lorry, trailer, semitrailer or the like, in each case with an interchangeable body, with
- a first bearing element (22) and a second bearing element (26) which can be attached, spaced apart (A), to the first assembly (12),
- a displacement device (32) which can be actuated by means of a control device (18) and which can be attached to the second assembly (14), wherein
- in the fitted-on state of the assemblies (12; 14) the displacement device (32) is arranged between the two bearing elements (22; 26) in such a way that the displacement device (32) can act on the bearing elements (22; 26) in order to bring about a relative movement of the two assemblies (12; 14),
**characterized in that**
- the displacement device (32) has a profile-rod-shaped linear unit (36) which is mounted in a longitudinally displaceable fashion in a bearing unit (34),
- the bearing unit (34) of the displacement device (32) forms, in the locked state, a counterbearing element for the first or second bearing element (22; 26), and
- the first bearing element (22) has a first internal stop face (24) and the second bearing element (26) has a second internal stop face (28), wherein in each case the end faces of the linear unit (36) of the displacement device (32) acts on the first or second internal stop face (24; 28) in order to carry out the relative displacement (V, -V).

2. Displacement and locking device according to Claim 1, **characterized in that**
- there is a flap unit (40) or slide unit which, in the locked state of the assemblies (12; 14) which are put down one onto the other, can be folded or slid between the bearing unit (34) and the first or second bearing element (22; 26).

3. Displacement and locking device according to Claim 2, **characterized in that**
- the folding unit (40) or sliding unit is designed so as to be capable of being activated manually.

4. Displacement and locking device according to Claim 2, **characterized in that**
- the folding unit (40) or sliding unit can be actuated or activated by means of an assembly.

5. Displacement and locking device according to one or more of Claims 2 to 4, **characterized in that**
the folding unit (40; 60) or sliding unit is embodied as a folding unit (40; 60) or sliding unit which is mounted so as to be rotatable about a rotational axis (42) and in the secured position surrounds the extended linear unit (36) of the displacement device (32) in certain areas, in particular in a positively fitting fashion.

6. Displacement and locking device according to one or more of Claims 2 to 5, **characterized in that**
- the folding unit (40) or sliding unit can be locked in the secured position by means of a securing bolt (48).

7. Displacement and locking device according to one or more of Claims 2 to 6, **characterized in that**
- a position detector (26) is provided for the positioning of the folding unit (40) or sliding unit and it outputs signals to a control device in accordance with the position of the folding unit (40; 60) or sliding unit.

8. Displacement and locking device according to one or more of Claims 2 to 7, **characterized in that**
- in the secured position the folding unit (40) or sliding unit is located between the first bearing element (22) or second bearing element (26) and the cylinder (34), and the stresses occurring between the two assemblies (12; 14) in the locked state are preferably transmitted from the first or second bearing element (22, 26) to the bearing unit (34) via the folding unit (40; 60) or sliding unit.

9. Displacement and locking device according to one or more of the preceding claims, **characterized in that** the displacement device has a threaded spindle which is embodied as a linear unit and which can be driven by a motor unit.

10. Displacement and locking device according to one or more of Claims 1 to 8, **characterized in that**
- the displacement device is embodied as a piston/cylinder unit (32), with its piston rod (34) as a linear unit and its cylinder (34) as a bearing unit.

11. Displacement and locking device according to Claim 10, **characterized in that**
- the piston/cylinder unit (32) is embodied as a synchronizing cylinder unit.

12. Displacement and locking device according to Claim 10 or 11, **characterized in that**
- pressure medium can be applied to the piston chamber of the piston/cylinder unit via a check valve, and in the locked state the stresses which occur between the assemblies (12; 14) are transmitted from the first bearing element (22) to the cylinder (34) via the piston rod (36).

13. Displacement and locking device according to one or more of the preceding claims, **characterized in that**
- the first assembly (12) or the bearing elements (22; 26) and the linear unit or the cylinder (34) have components or cross-sectional formations (62; 74), in particular inclined edges, which, where necessary, exert a position-adapting function, preferably in the longitudinal direction and/or in the transverse direction of the relative displacement (V, -V), on one another when the assemblies (12; 14) are fitted on.

14. Displacement and locking device according to Claim 10, **characterized in that**
- at least one end border edge of the linear unit or of the cylinder (34) has in certain areas a cross-sectional contour (50) which drops away obliquely towards the outside in the sitting-down direction (S), and the first or second bearing element (22; 26) has a corresponding opposing cross-sectional contour (52) which points obliquely inwards.

15. Displacement and locking device according to Claim 5, 6, 7 or 8, **characterized in that**
- in the secured position the folding unit (60) or sliding unit is located mechanically free of play between the first or second bearing element (22; 26) and the linear unit or the cylinder (34).

16. Displacement and locking device according to Claim 15, **characterized in that**
- the lateral area (62), facing the first or second bearing element (22; 26), of the folding unit (60) or the sliding unit is embodied so as to be inclined inwards, and the end border area (74), facing the folding unit (60) or sliding unit, of the first or second bearing element (72) is embodied with a corresponding opposing inclination.

17. Displacement and locking device according to Claim 8, 15 or 16, **characterized in that**
- in the secured position the folding unit (44, 60) or sliding unit bears against the end side of the cylinder (34) facing the first or second bearing element (22; 26).

18. Displacement and locking device according to one or more of the preceding claims, **characterized in that**
- a locking shoe is arranged on the first or second bearing element (22; 26), which locking shoe is in engagement, after the relative displacement (V) has been carried out, with a low-tension unit which is provided on the second component (14).

19. Displacement and locking device according to one or more of the preceding Claims 10 to 18, **characterized in that**
- the piston/cylinder unit (32) is embodied as a hydraulic unit.

20. Displacement and locking device according to one or more of the preceding claims, **characterized in that**
- the displacement device or the piston/cylinder unit (32) is arranged on a bracket unit (16) which can be connected to the second assembly (14).

21. Displacement and locking device according to Claim 20, **characterized in that**
- the folding unit (40) or sliding unit is connected to the bracket unit (16).

22. Displacement and locking device according to one or more of the preceding claims, **characterized in that**
- the length (L) of the linear unit (36) is slightly smaller than the distance (A) between the bearing elements (22; 24).

23. Transport vehicle, in particular lorry, trailer, semitrailer or the like, having a chassis with an interchangeable body, **characterized in that**
- at least one displacement and locking device according to one or more of the preceding claims is provided, wherein the first assembly (12) is embodied as an interchangeable body, and the second assembly (14) is embodied as a chassis.

24. Transport vehicle according to Claim 23, **characterized in that**
in each case at least one displacement and locking device is arranged on the lateral longitudinal areas of the vehicle.

## Revendications

1. Dispositif (10) de déplacement et de blocage, destiné au verrouillage libérable d'une première unité structurelle (12) avec une seconde unité structurelle (14), sachant qu'un coulissement relatif (V, -V) des deux unités structurelles (12 ; 14) a lieu pour provoquer respectivement le verrouillage ou le déverrouillage d'un mécanisme de verrouillage, puis lesdites unités structurelles (12, 14) sont respectivement séparées l'une de l'autre ou déposées l'une sur l'autre, en particulier pour un poids lourd, une remorque, une semi-remorque ou un véhicule similaire respectivement équipé d'une carrosserie interchangeable, comprenant
- un premier élément de contre-butée (22) et un second élément de contre-butée (26) pouvant être fixés, avec espacement (A), à la première unité structurelle (12), et
- un système de déplacement (32) activable par l'intermédiaire d'un système de commande (18) et pouvant être fixé à la seconde unité structurelle (14), sachant que,
- lorsque les unités structurelles (12 ; 14) sont placées l'une sur l'autre, le système de déplacement (32) est interposé entre les deux éléments de contre-butée (22 ; 26), de façon telle que ledit système de déplacement (32) puisse agir sur lesdits éléments de contre-butée (22 ; 26) en vue de provoquer un mouvement relatif des deux unités structurelles (12 ; 14),
**caractérisé par le fait que**
- le système de déplacement (32) comporte une unité linéaire (36) en forme de barre profilée, montée à coulissement longitudinal dans une unité de support ou d'appui (34),
- ladite unité de support ou d'appui (34) du système de déplacement (32) forme, à l'état verrouillé, un élément d'arrêt respectivement associé au premier ou au second élément de contre-butée (22 ; 26), et
- le premier élément de contre-butée (22) possède une première surface de butée intérieure (24), et le second élément de contre-butée (26) possède une seconde surface de butée intérieure (28), les faces extrêmes respectives de l'unité linéaire (36) du système de déplacement (32) agissant, respectivement, sur la première ou la seconde surface de butée intérieure (24 ; 28) en vue de l'exécution du coulissement relatif (V, -V).

2. Dispositif de déplacement et de blocage selon la revendication 1,
**caractérisé par**
- la présence d'une unité rabattable (40) ou unité coulissante qui, à l'état verrouillé des unités structurelles (12 ; 14) placées l'une sur l'autre, peut être respectivement rabattue ou animée d'un coulissement entre l'unité linéaire (36) et, respectivement, le premier ou le second élément de contre-butée (22 ; 26).

3. Dispositif de déplacement et de blocage selon la revendication 2,
**caractérisé par le fait que**
- l'unité rabattable (40), ou unité coulissante, est réalisée avec faculté d'actionnement manuel.

4. Dispositif de déplacement et de blocage selon la revendication 2,
**caractérisé par le fait que**
- l'unité rabattable (40), ou unité coulissante, est actionnable avec faculté d'activation par l'intermédiaire d'un groupe ou d'une unité.

5. Dispositif de déplacement et de blocage selon l'une ou plusieurs des revendications 2 à 4,
**caractérisé par le fait que**
- l'unité rabattable (40 ; 60), ou unité coulissante, est réalisée sous la forme d'une unité rabattable (40 ; 60) ou d'une unité coulissante qui est montée rotative autour d'un axe de rotation (42) et qui, en position d'arrêt ou de sûreté, entoure par zones, notamment par concordance de formes, l'unité linéaire (36) déployée du système de déplacement (32).

6. Dispositif de déplacement et de blocage selon l'une ou plusieurs des revendications 2 à 5,
**caractérisé par le fait que**
- l'unité rabattable (40), ou unité coulissante, peut être stoppée en position d'arrêt ou de sûreté par l'intermédiaire d'un verrou d'arrêt ou de sûreté (48).

7. Dispositif de déplacement et de blocage selon l'une ou plusieurs des revendications 2 à 6,
**caractérisé par**
- la présence d'un détecteur de positions (26) qui est affecté à la position de l'unité rabattable (40), ou unité coulissante, et qui délivre des signaux à un système de commande en concordance avec la position de ladite unité rabattable (40 ; 60), ou unité coulissante.

8. Dispositif de déplacement et de blocage selon l'une ou plusieurs des revendications 2 à 7,
**caractérisé par le fait que**
- l'unité rabattable (40), ou unité coulissante, est interposée entre le cylindre (34) et le premier élément de contre-butée (22) ou le second élément de contre-butée (26), en position de sûreté ; et les sollicitations, agissant à l'état verrouillé entre les deux unités structurelles (12 ; 14), sont répercutées sur ou transmis à l'unité linéaire (36) à partir du premier ou du second élément de contre-butée (22, 26), de préférence par l'intermédiaire de ladite unité rabattable (40 ; 60) ou unité coulissante.

9. Dispositif de déplacement et de blocage selon l'une ou plusieurs des revendications précédentes,
**caractérisé par le fait que**
- le système de déplacement présente une broche filetée réalisée en tant qu'unité linéaire et pouvant être entraînée par un groupe moteur.

10. Dispositif de déplacement et de blocage selon l'une ou plusieurs des revendications 1 à 8,
**caractérisé par le fait que**
- le système de déplacement est réalisé sous la forme d'un groupe formant vérin (32), dont la tige (36) du piston remplit la fonction d'une unité linéaire, et dont le cylindre (34) remplit la fonction d'une unité de support ou d'appui.

11. Dispositif de déplacement et de blocage selon la revendication 10,
**caractérisé par le fait que**
- le groupe formant un vérin (32) est réalisé sous la forme d'un groupe cylindrique synchrone.

12. Dispositif de déplacement et de blocage selon la revendication 10 ou 11,
**caractérisé par le fait que**
- la chambre du piston du groupe formant un vérin peut être sollicitée par un fluide pressurisé, par l'intermédiaire d'une vanne d'arrêt ou anti-retour ; et, à l'état verrouillé, les sollicitations agissant entre les unités structurelles (12 ; 14) sont répercutées sur le cylindre (34) à partir du premier élément de contre-butée (22), par l'intermédiaire de la tige (36) du piston.

13. Dispositif de déplacement et de blocage selon l'une ou plusieurs des revendications précédentes,
**caractérisé par le fait que**
- la première unité structurelle (12) ou, respectivement, les éléments de contre-butée (22 ; 26) et l'unité linéaire ou, respectivement, le cylindre (34) sont respectivement pourvu(e)s d'éléments structurels ou de configurations de section transversale (62 ; 74), en particulier de flancs inclinés qui, lorsque lesdites unités structurelles (12 ; 14) sont placées l'une sur l'autre, exercent si besoin est une fonction directionnelle d'amenée, de préférence dans le sens longitudinal et/ou dans le sens transversal du coulissement relatif (V, -V).

14. Dispositif de déplacement et de blocage selon la revendication 10,
**caractérisé par le fait**
- **qu'**au moins un bord frontal respectif de l'unité linéaire ou du cylindre (34) présente, par zones, un profil de section transversale (50) déclinant à l'oblique vers l'extérieur dans la direction de dépose (S), et le premier ou, respectivement, le second élément de contre-butée (22 ; 26) possède un profil correspondant de section transversale complémentaire (52), orienté à l'oblique vers l'intérieur.

15. Dispositif de déplacement et de blocage selon la revendication 5, 6, 7 ou 8,
**caractérisé par le fait que**
- l'unité rabattable (60), ou unité coulissante, est interposée avec absence de jeu mécanique, en position d'arrêt ou de sûreté, entre le premier ou second élément de contre-butée (22 ; 26) et, respectivement, l'unité linéaire ou le cylindre (34).

16. Dispositif de déplacement et de blocage selon la revendication 15,
**caractérisé par le fait que**
- la région latérale (62) de l'unité rabattable (60), ou unité coulissante, qui est tournée vers le premier ou le second élément de contre-butée (22 ; 26), est réalisée avec inclinaison vers l'intérieur ; et la région marginale latérale (74) du premier ou second élément de contre-butée (72), tournée vers ladite unité rabattable (60) ou unité coulissante, est réalisée avec inclinaison complémentaire correspondante.

17. Dispositif de déplacement et de blocage selon la revendication 8, 15 ou 16,
**caractérisé par le fait que**
- l'unité rabattable (40, 60) ou unité coulissante est appliquée, en position d'arrêt ou de sûreté, contre la face extrême du cylindre (34) qui est tournée vers le premier ou le second élément de contre-butée (22 ; 26).

18. Dispositif de déplacement et de blocage selon l'une ou plusieurs des revendications précédentes,
**caractérisé par le fait**
- **qu'**un patin de verrouillage disposé sur le premier ou le second élément de contre-butée (22 ; 26) est en prise, après l'exécution du coulissement relatif (V), avec une unité de consignation à demeure présente sur la seconde partie structurelle (14).

19. Dispositif de déplacement et de blocage selon l'une ou plusieurs des revendications précédentes 10 à 18,
**caractérisé par le fait que**
- le groupe formant vérin (32) est réalisé sous la forme d'un groupe hydraulique.

20. Dispositif de déplacement et de blocage selon l'une ou plusieurs des revendications précédentes,
**caractérisé par le fait que**
- le système de déplacement ou, respectivement, le groupe formant vérin (32) se trouve sur une unité à console (16) pouvant être raccordée à la seconde unité structurelle (14).

21. Dispositif de déplacement et de blocage selon la revendication 20,
**caractérisé par le fait**
- **que** l'unité rabattable (40), ou unité coulissante, est rattachée à l'unité à console (16).

22. Dispositif de déplacement et de blocage selon l'une ou plusieurs des revendications précédentes,
**caractérisé par le fait que**
- la longueur (L) de l'unité linéaire (36) est légèrement plus petite que l'espacement (A) des éléments de contre-butée (22 ; 24).

23. Véhicule de transport, notamment poids lourd, remorque, semi-remorque ou véhicule similaire muni d'un châssis de roulement à carrosserie interchangeable,
**caractérisé par**
- la présence d'au moins un dispositif de déplacement et de blocage selon l'une ou plusieurs des revendications précédentes, la première unité structurelle (12) étant réalisée comme une carrosserie interchangeable, et la seconde unité structurelle (14) étant réalisée comme un châssis de roulement.

24. Véhicule de transport selon la revendication 23,
**caractérisé par le fait**
- **qu'**au moins un dispositif de déplacement et de blocage est respectivement implanté dans les régions longitudinales latérales dudit véhicule.
